# EUROPÄISCHE PATENTSCHRIFT

(11) **EP 3 715 144 B1**
(45) Veröffentlichungstag und Bekanntmachung des Hinweises auf die Patenterteilung: **19.01.2022**
(21) Anmeldenummer: 20154490.5
(22) Anmeldetag: 30.01.2020
(51) Int. Cl.: B60C 9/00, B60C 9/18, B60C 9/20, B60C 9/22

(54) **FAHRZEUGLUFTREIFEN AUFWEISEND EINE GÜRTELBANDAGE MIT EINEM HYBRIDKORD AUFWEISEND PA 6.6 UND PET**
PNEUMATIC VEHICLE TYRE COMPRISING A BELT PRESS-ON BAND WITH A HYBRID CORD COMPRISING PA 6.6 AND PET
PNEUMATIQUE DE VÉHICULE COMPORTANT UNE SANGLE DE CEINTURE DOTÉE D'UN CORDON HYBRIDE COMPORTANT LE PA 6.6 ET LE PET

(30) Priorität: 26.03.2019 DE 102019204158
(43) Veröffentlichungstag der Anmeldung: 30.09.2020
(73) Patentinhaber: Continental Reifen Deutschland GmbH, 30165 Hannover (DE)
(72) Erfinder: Reese, Wolfgang, 30419 Hannover (DE)
(74) Vertreter: Continental Corporation

(56) Entgegenhaltungen:
- EP-A1- 3 031 623
- EP-A1- 3 441 237
- WO-A1-2015/074778
- WO-A1-2015/137901

## Beschreibung

Die Erfindung betrifft einen Fahrzeugluftreifen mit einer Karkasse, einem profilierten Laufstreifen, einem Gürtel und einer diesen Gürtel bedeckenden ein- oder mehrlagigen Gürtelbandage mit in Umfangsrichtung des Reifens verlaufenden Festigkeitsträgern, wobei zumindest eine Bandagenlage der Gürtelbandage zumindest einen Hybridkord aus zwei miteinander endverdrehten Garnen als Festigkeitsträger aufweist, wobei das erste Garn ein Garn aus Polyamid 6.6 (PA 6.6) ist und das zweite Garn ein Garn aus Polyethylenterephthalat (PET) ist.

Um bei Fahrzeugluftreifen eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Karkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden können. Die Festigkeitsträger werden in der Regel für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Oder aber es werden Festigkeitsträger aufgebracht, die klebrig imprägniert sind und ohne eine kalandrierte Haftmischung verarbeitet werden können.

Die Festigkeitsträger der Gürtelbandage sollen bei der Reifenherstellung eine ausreichende Erhebung bei der Bombage sowie in der Vulkanisationsform zulassen, damit der Reifen präzise ausgeformt werden kann, und sie sollen nach der Fertigstellung des Reifens im Fahrbetrieb eine Erhebung des Reifens durch die im Fahrbetrieb auftretenden Fliehkräfte zu begrenzen.

Polyamid 6.6 (PA 6.6) ist ein übliches Material für die Festigkeitsträger der Gürtelbandage. Üblich sind hierbei etwa Korde aus zwei miteinander endverdrehten Garnen aus PA 6.6. Korde aus PA 6.6 weisen allerdings einen nachteiligen Schrumpf auf, was sich negativ auf das Flatspotverhalten auswirkt. Weiter weist PA 6.6 einen geringen Elastizitätsmodul auf, wodurch zur Erzielung einer ausreichenden Umfangssteifigkeit ausreichend dicke Korde aus PA 6.6 verwendet werden sollten.

Korde aus Polyethylenterephthalat (PET) weisen einen für den Einsatz in der Gürtelbandage im Vergleich zu PA 6.6 vorteilhaft erhöhten Elastizitätsmodul auf und sind kostengünstiger als entsprechende Korde aus PA 6.6. Jedoch weisen Korde aus PET Nachteile in der Haftung und in der Ermüdungsbeständigkeit auf.

Aus der WO 2015/137901 A1 ist es bekannt, ein Garn aus PET und ein Garn aus PA 6.6 zu einem Hybridkord als Festigkeitsträger der Gürtelbandage endzuverdrehen.

Aus der WO 2017/048208 A1 ist es bekannt, ein Garn aus PET und ein Garn aus PA 6.6 zu einem Hybridkord als Festigkeitsträger der Gürtelbandage endzuverdrehen. Hierdurch können die vorteilhaften Eigenschaften beider Garne zum Hybridkord beitragen. Allerdings weisen die offenbarten Korde eine Gesamtfeinheit von mindestens 2000 dtex und damit einen relativ großen Durchmesser auf.

Die Entwicklung geht jedoch dahin, den Rollwiderstand zu verbessern. Es ist dabei bekannt, dass eine Reduzierung des Durchmessers der Festigkeitsträger der Gürtelbandage zur Verbesserung des Rollwiderstands beitragen. Jedoch müssen auch bei reduziertem Durchmesser die an einen Festigkeitsträger der Gürtelbandage gestellten Anforderungen weiterhin erfüllt sein.

Der Erfindung liegt daher die Aufgabe zugrunde, einen günstigen Fahrzeugluftreifen mit einer Gürtelbandage bereitzustellen, der einen verringerten Rollwiderstand aufweist und eine ausreichende Ermüdungsbeständigkeit aufweist.

Gelöst wird die gestellte Aufgabe erfindungsgemäß dadurch, dass die Gesamtfeinheit des Hybridkords 460 dtex bis 695 dtex beträgt, dass jeder der beiden Garne eine Feinheit aufweist, die 32 % bis 68 % der Gesamtfeinheit des Hybridkords beträgt und dass der Twistfaktor des Hybridkords 118 bis 150 beträgt, wobei der Twistfaktor gleich dem Twist [T/m] * Wurzel (tex/1000) ist.

Erstaunlicherweise hat sich herausgestellt, dass ein Hybridkord aus einem ersten Garn aus PA 6.6 und einem zweiten Garn aus PET, die miteinander endverdreht sind, bereits bei einer Gesamtfeinheit des Hybridkords von nur 460 dtex bis 695 dtex hervorragend für den Einsatz als Festigkeitsträger der Gürtelbandage geeignet ist.

Verglichen mit PA 6.6 weist PET einen höheren Elastizitätsmodul auf. Hierdurch kann der Hybridkord mit einer geringeren Gesamtfeinheit gewählt werden.

Durch die geringe Gesamtfeinheit des Hybridkords ist eine viel dünnere Festigkeitsträgerlage der Gürtelbandage und somit ein geringerer Rollwiderstand des Fahrzeugluftreifens ermöglicht. Durch den geringeren Materialeinsatz und das kostengünstigere PET ist der Fahrzeugluftreifen zudem kostengünstiger.

Jedes Garn weist dabei eine Feinheit auf, die 32 % bis 68 % der Gesamtfeinheit des Hybridkords beträgt. Durch diesen relativen Mindestanteil kann sowohl das erste Garn aus PA 6.6 als auch das zweite Garn aus PET seine vorteilhaften Materialeigenschaften in den Hybridkord in einem ausreichenden vorteilhaften Maß einbringen.

Die Verminderung an PA 6.6 Material durch die Reduzierung der Gesamtfeinheit sowie den Anteil von 32 % bis 68 % an der Gesamtfeinheit durch das zweite Garn aus PET führt zudem zu einer Verbesserung des Flatspot-Verhaltens, da die Menge an schrumpfendem Material reduziert ist und zudem PET eine im Vergleich zu PA 6.6 verbesserte thermische Stabilität aufweist. Zudem ist PET ein kostengünstiges und Material mit guter Marktverfügbarkeit.

Jedoch kann sich der Einsatz von PET in der Regel negativ auf die Ermüdungsbeständigkeit auswirken. Bei solch dünnen Festigkeitsträgern aufweisend ein Garn aus PET ist deshalb der hohe Twistfaktor von 118 bis 150. Es hat sich gezeigt, dass hierdurch eine ausreichende Ermüdungsbeständigkeit des Hybridkords trotz des geringen Durchmessers des Hybridkords und trotz des Anteils an PET des zweiten Garns sichergestellt werden. Ein geringerer Twistfaktor als 118 führt bei einer Gesamtfeinheit von nur 460 dtex bis 695 dtex zu einer zu geringen Ermüdungsbeständigkeit. Dies kann die Dauerhaltbarkeit insbesondere bei Zug-Druck-Wechselbelastung im Bereich der Gürtelkanten beeinträchtigen. Ein Twistfaktor von größer als 150 ist aufwändig in der Vertwistung und führt zu ungewünschten Verlusten im Elastizitätsmodul und in der Bruchfestigkeit.

Erstaunlicherweise hat sich gezeigt, dass auch ein solch dünner Hybridkord bei ausreichender Ermüdungsbeständigkeit ein für den Einsatz als Festigkeitsträger einer Gürtelbandage ausgezeichnetes Kraft-Dehnungs-Verhalten aufweist und der Elastizitätsmodul ausreichend ist, um eine ausreichende Umfangssteifigkeit der Gürtelbandage zu gewährleisten.

Somit ist kostengünstiger Fahrzeugluftreifen mit einer Gürtelbandage bereitgestellt, der einen verringerten Rollwiderstand sowie eine ausreichende Ermüdungsbeständigkeit und Umfangssteifigkeit aufweist.

Ein "Twistfaktor" ist ein Maß für den Twist, also die Verdrehung, bezogen auf die jeweilige Feinheit. Der Twistfaktor ist dabei gleich dem Twist [T/m] * Wurzel (tex/1000). Ein Kord der Gesamtfeinheit von 460 dtex, der mit einem Twist von 550 T/m (wobei T/m für Umdrehungen pro Meter steht) endverdreht ist, weist somit einen Twistfaktor von 118 auf.

Ein "Garn" ist im Rahmen der vorliegenden Erfindung in Anlehnung an die DIN 60900 ein linienförmiges Gebilde, das aus einzelnen Filamenten oder Fasern besteht. Bevorzugt sind die Filamente oder Fasern des Garns miteinander verdreht. Ein "Kord" besteht aus zwei oder mehr miteinander endverdrehten (vertwisteten) Garnen. Ein "Hybridkord" stellt einen Kord dar, der zumindest zwei unterschiedliche Garne aufweist. Ein Garn aus einem Material ist ganz oder teilweise aus diesem Material gebildet. Bevorzugt ist das Garn ganz aus dem jeweiligen Material gebildet. Solche Garne sind einfacher in der Herstellung und kostengünstiger. Die Gesamtfeinheit eines Kords wird als die Summe der Feinheiten der Garne des Kords berechnet.

Um eine zuverlässige Haftung eines Festigkeitsträgers zum Gummi zu gewährleisten, ist es zweckmäßig, die Festigkeitsträger der Bandagenlage mit einer Haftimprägnierung, z.B. mit einem RFL-Dip im 1- oder 2-Bad-Verfahren, zu versehen.

Eine bevorzugte Ausführungsform ist dadurch gegeben, dass der Twistfaktor 118 bis 150, bevorzugt 125 bis 140, beträgt. Es hat sich gezeigt, dass für die Hybridkorde mit der genannten geringen Gesamtfeinheit ein solcher Twistfaktor besonders vorteilhaft bezüglich der Faktoren Ermüdungsbeständigkeit und Twistaufwand ist.

Eine vorteilhafte Ausführungsform ist dadurch gegeben, dass der Twist 510 T/m bis 590 T/m, bevorzugt 540 T/m bis 560 T/m, besonders bevorzugt 545 T/m bis 555 T/m, beträgt. Ein solcher Twist ermöglicht eine vorteilhafte Ermüdungsbeständigkeit bei gleichzeitiger Begrenzung des Twistaufwands.

Eine vorteilhafte Ausführungsform ist dadurch gegeben, dass der Unterschied der Feinheiten der beiden Garne 30 % bis 60 %, bevorzugt 35 % bis 55 %, jeweils bezogen auf den größeren Wert der Feinheiten der beiden Garne.

Eine vorteilhafte Ausführungsform ist dadurch gegeben, dass das erste Garn aus PA 6.6 eine Feinheit von 235 dtex bis 470 dtex, bevorzugt 235 dtex, 350 dtex oder 470 dtex, besonders bevorzugt 235 dtex, aufweist. Garne aus PA 6.6 sind mit der Feinheit 235 dtex, 350 dtex und 470 dtex besonders gut marktverfügbar. Ein erstes Garn aus PA 6.6 der Feinheit 235 dtex ermöglicht einen besonders dünnen Hybridkord mit wenig schrumpfendem Material. Ein erstes Garn aus PA 6.6 der Feinheit 470 dtex ermöglicht über die vorteilhaften Schrumpfkräfte im Betrieb, insbesondere im Hochgeschwindigkeitseinsatz, eine verbesserte Umfangssteifigkeit. Ein erstes Garn aus PA 6.6 der Feinheit 470 dtex vereint beide Vorteile.

Eine weitere vorteilhafte Ausführungsform ist dadurch gegeben, dass das zweite Garn aus PET eine Feinheit von 225 dtex bis 360 dtex, bevorzugt 225 dtex, aufweist. Garne aus PET der Feinheit 225 dtex und 360 dtex sind besonders gut marktverfügbar. Eine geringe Feinheit von 225 dtex ermöglicht einen besonders dünnen Hybridkord. Auch ein zweites Garn aus PET der Feinheit 360 dtex ermöglicht einen dünnen Hybridkord, da durch den Einsatz an PET der Elastizitätsmodul des Hybridkords erhöht wird.

Eine besonders dünner Hybridkord ist durch einen Kord der Konstruktion PA 6.6 235 x 1 + PET 225 x 1 gegeben, der einen Twistfaktor von 118 - 127 aufweist. In einer solchen Konstruktion ist genau ein erstes Garn aus PA 6.6 mit einer Feinheit von 235 dtex mit genau einem zweiten Garn aus PET der Feinheit 225 dtex endverdreht. Durch die Kombination aus den genannten Garnfeinheiten und dem Twistfaktor von 118 bis 127 weist der Hybridkord eine sehr geringe Gesamtfeinheit und trotzdem eine ausreichende Ermüdungsbeständigkeit auf. Der Hybridkord eignet sich hervorragend für den Einsatz in der Gürtelbandage. Er ermöglicht eine besonders dünne Festigkeitsträgerlage und einen reduzierten Rollwiderstand.

Vorteilhafte Ausführungsbeispiele sind auch die Konstruktionen PA 6.6 350 x 1 + PET 225 x 1 oder PA 6.6 470 x 1 + PET 225 x 1 oder PA 6.6 235 x 1 + PET 360 x 1, wobei das erste Garn und das zweite Garn mit einem Twistfaktor von 134 bis 145, bevorzugt von 135, miteinander endverdreht sind.

Der Kord PA 6.6 350 x 1 + PET 225 x 1 weist dabei bevorzugt einen Twistfaktor von 134 bis 138, besonders bevorzugt von 135, auf.

Der Kord PA 6.6 470 x 1 + PET 225 x 1 weist dabei bevorzugt einen Twistfaktor von 134 bis 145, besonders bevorzugt von 140, auf.

Der Kord PA 6.6 235 x 1 + PET 360 x 1 weist dabei bevorzugt einen Twistfaktor von 134 bis 138, besonders bevorzugt von 135, auf.

Vorteilhaft ist es auch, wenn der Hybridkord der Konstruktion PA 6.6 470 x 1 + PET 225 x 1 mit einer Fadendichte von 90 epdm bis 120 epdm, bevorzugt 100 epdm, angeordnet ist.

Die genannte Kordkonstruktion ermöglicht eine geringe Fadendichte von 90 epdm bis 120 epdm, bevorzugt 100 epdm, wodurch sich ein besonders lichter Abstand ermöglicht ist. Eine Anordnung mit in etwa 100 epdm ergibt beispielsweise einen lichten Abstand von in etwa 0,67 mm. Ein Kord der Konstruktion PA 6.6 470 x2 in einer üblichen Anordnung mit 130 epdm hingegen weist einen lichten Abstand von lediglich 0,37 mm auf. Durch den vergrößerten lichten Abstand ist ein Vorteil für die Haltbarkeit, insbesondere infolge geringerer Scherspannungen in der Gummierung, ermöglicht.

Entsprechende Vorteile ergeben sich für einen Hybridkord die Konstruktion PA 6.6 235 x 1 + PET 225 x 1, der mit einer Fadendichte von 110 epdm bis 130 epdm, bevorzugt von 120 epdm, angeordnet ist. Die genannte Kordkonstruktion ermöglicht eine geringe Fadendichte von 110 epdm bis 130 epdm, bevorzugt von 120 epdm, wodurch sich ein besonders lichter Abstand ermöglicht ist. Eine Anordnung mit in etwa 120 epdm ergibt beispielsweise einen lichten Abstand von in etwa 0,58 mm.

Besonders bevorzugt handelt es sich um einen Fahrzeugluftreifen für einen Personenkraftwagen.

## Patentansprüche

1. Fahrzeugluftreifen mit einer Karkasse, einem profilierten Laufstreifen, einem Gürtel und einer diesen Gürtel bedeckenden ein- oder mehrlagigen Gürtelbandage mit in Umfangsrichtung des Reifens verlaufenden Festigkeitsträgern, wobei zumindest eine Bandagenlage der Gürtelbandage zumindest einen Hybridkord aus zwei miteinander endverdrehten Garnen als Festigkeitsträger aufweist, wobei das erste Garn ein Garn aus Polyamid 6.6 (PA 6.6) ist und das zweite Garn ein Garn aus Polyethylenterephthalat (PET) ist
**dadurch gekennzeichnet, dass**
• die Gesamtfeinheit des Hybridkords 460 dtex bis 695 dtex beträgt,
• dass jeder der beiden Garne eine Feinheit aufweist, die 32 % bis 68 % der Gesamtfeinheit des Hybridkords beträgt und
• dass der Twistfaktor des Hybridkords 118 bis 150 beträgt, wobei der Twistfaktor gleich dem Twist [T/m] ^{∗} Wurzel (tex/1000) ist.

2. Fahrzeugluftreifen nach Anspruch 1, **dadurch gekennzeichnet, dass** der Twistfaktor 118 bis 150, bevorzugt 125 bis 140, beträgt.

3. Fahrzeugluftreifen nach zumindest einem der vorangehenden Ansprüche, **dadurch gekennzeichnet, dass** der Twist 510 T/m bis 590 T/m, bevorzugt 540 T/m bis 560 T/m, besonders bevorzugt 545 T/m bis 555 T/m, beträgt.

4. Fahrzeugluftreifen nach zumindest einem der vorangehenden Ansprüche, **dadurch gekennzeichnet, dass** der Unterschied der Feinheiten der beiden Garne 30 % bis 60 %, bevorzugt 35 % bis 55 %, jeweils bezogen auf den größeren Wert der Feinheiten der beiden Garne.

5. Fahrzeugluftreifen nach zumindest einem der vorangehenden Ansprüche, **dadurch gekennzeichnet, dass** das erste Garn aus PA 6.6 eine Feinheit von 235 dtex bis 470 dtex, bevorzugt 235 dtex, 350 dtex oder 470 dtex, besonders bevorzugt 235 dtex, aufweist.

6. Fahrzeugluftreifen nach zumindest einem der vorangehenden Ansprüche, **dadurch gekennzeichnet, dass** das zweite Garn aus PET eine Feinheit von 225 dtex bis 360 dtex, bevorzugt 225 dtex, aufweist.

7. Fahrzeugluftreifen nach zumindest einem der vorangehenden Ansprüche, **dadurch gekennzeichnet, dass** der Hybridkord die Konstruktion PA 6.6 235 x 1 + PET 225 x 1 und einen Twistfaktor von 118 - 127 aufweist.

8. Fahrzeugluftreifen nach zumindest einem der vorangehenden Ansprüche, **dadurch gekennzeichnet, dass** der Hybridkord die Konstruktion
• PA 6.6 350 × 1 + PET 225 × 1 oder
• PA 6.6 470 x 1 + PET 225 x 1 oder
• PA 6.6235 x 1 + PET 360 x 1
sowie einen Twistfaktor von 134 bis 145, bevorzugt 135, aufweist.

9. Fahrzeugluftreifen nach zumindest einem der vorangehenden Ansprüche, **dadurch gekennzeichnet, dass** der Hybridkord die Konstruktion
• PA 6.6 470 x 1 + PET 225 x 1 und mit einer Fadendichte von 90 epdm bis 120 epdm, bevorzugt 100 epdm, angeordnet ist.

10. Fahrzeugluftreifen nach zumindest einem der vorangehenden Ansprüche, **dadurch gekennzeichnet, dass** der Hybridkord die Konstruktion
• PA 6.6 235 × 1 + PET 225 × 1 und mit einer Fadendichte von 110 epdm bis 120 epdm, bevorzugt von 120 epdm, angeordnet ist.

## Claims

1. Pneumatic vehicle tyre having a carcass, a profiled tread, a belt and a single-or multi-ply belt bandage comprising strength members running in the circumferential direction of the tyre, wherein at least one of the bandage plies of the belt bandage comprises at least one hybrid cord composed of two mutually end-twisted yarns as a strength member, wherein the first yarn is a yarn made of polyamide 6 (PA 6.6) and the second yarn is a yarn made of polyethylene terephthalate (PET) **characterized in that**
• the overall linear density of the hybrid cord is 460 dtex to 695 dtex,
• **in that** each of the two yarns has a linear density which is 32% to 68% of the overall linear density of the hybrid cord and
• **in that** the twist factor of the hybrid cord is 118 to 150, wherein the twist factor is given by the formula: twist [T/m] *√(tex/1000).

2. Pneumatic vehicle tyre according to Claim 1, **characterized in that** the twist factor is 118 to 150, preferably 125 to 140.

3. Pneumatic vehicle tyre according to at least one of the preceding claims, **characterized in that** the twist is 510 T/m to 590 T/m, preferably 540 T/m to 560 T/m, particularly preferably 545 T/m to 555 T/m.

4. Pneumatic vehicle tyre according to at least one of the preceding claims, **characterized in that** the difference in the linear densities of the two yarns is 30% to 60%, preferably 35% to 55%, in each case based on the larger value of the linear densities of the two yarns.

5. Pneumatic vehicle tyre according to at least one of the preceding claims, **characterized in that** the first yarn made of PA 6.6 has a linear density of 235 dtex to 470 dtex, preferably 235 dtex, 350 dtex or 470 dtex, particularly preferably 235 dtex.

6. Pneumatic vehicle tyre according to at least one of the preceding claims, **characterized in that** the second yarn made of PET has a linear density of 225 dtex to 360 dtex, preferably 225 dtex.

7. Pneumatic vehicle tyre according to at least one of the preceding claims, **characterized in that** the hybrid cord has the construction PA 6.6 235 x 1 + PET 225 x 1 and a twist factor of 118-127.

8. Pneumatic vehicle tyre according to at least one of the preceding claims, **characterized in that** the hybrid yarn has the construction:
• PA 6.6 350 x 1 + PET 225 x 1 or
• PA 6.6 470 x 1 + PET 225 x 1 or
• PA 6.6 235 x 1 + PET 360 x 1
and a twist factor of 134 to 145, preferably 135.

9. Pneumatic vehicle tyre according to at least one of the preceding claims, **characterized in that** the hybrid cord has the construction:
• PA 6.6 470 x 1 + PET 225 x 1 and is arranged with a thread density of 90 epdm to 120 epdm, preferably 100 epdm.

10. Pneumatic vehicle tyre according to at least one of the preceding claims, **characterized in that** the hybrid cord has the construction
• PA 6.6 235 x 1 + PET 225 x 1 and is arranged with a thread density of 110 epdm to 120 epdm, preferably of 120 epdm.

## Revendications

1. Pneumatique de véhicule comportant une carcasse, une bande de roulement pourvue de sculptures, une ceinture et un bandage de ceinture monocouche ou multicouches qui recouvre cette ceinture et qui comprend des renforts s'étendant dans la direction circonférentielle du pneumatique, au moins une couche du bandage de ceinture comportant comme renfort au moins un câble hybride formé de deux fils torsadés en bout, le premier fil étant un fil en polyamide 6.6 (PA 6.6) et le deuxième fil étant un fil en polyéthylène téréphtalate (PET),
**caractérisé en ce que**
• la finesse totale du câble hybride est de 460 dtex à 695 dtex,
• chacun des deux fils a une finesse qui est de 32 % à 68 % de la finesse totale du câble hybride et
• le facteur de torsion du câble hybride est de 118 à 150, le facteur de torsion étant égal à la torsion [T/m]*Racine(tex/1000).

2. Pneumatique de véhicule selon la revendication 1, **caractérisé en ce que** le facteur de torsion est de 118 à 150, de préférence de 125 à 140.

3. Pneumatique de véhicule selon l'une au moins des revendications précédentes, **caractérisé en ce que** la torsion est de 510 T/m à 590 T/m, de préférence de 540 T/m à 560 T/m, de manière particulièrement préférée de 545 T/m à 555 T/m.

4. Pneumatique de véhicule selon l'une au moins des revendications précédentes, **caractérisé en ce que** la différence entre les finesses des deux fils est de 30 à 60 %, de préférence de 35 à 55 %, à chaque fois sur la base de la plus grande valeur des finesses des deux fils.

5. Pneumatique de véhicule selon l'une au moins des revendications précédentes, **caractérisé en ce que** le premier fil en PA 6.6 a une finesse de 235 dtex à 470 dtex, de préférence de 235 dtex, de 350 dtex ou de 470 dtex, de manière particulièrement préférée de 235 dtex.

6. Pneumatique de véhicule selon l'une au moins des revendications précédentes, **caractérisé en ce que** le deuxième fil en PET a une finesse de 225 dtex à 360 dtex, de préférence de 225 dtex.

7. Pneumatique de véhicule selon l'une au moins des revendications précédentes, **caractérisé en ce que** le câble hybride a la construction PA 6.6 235x1 + PET 225x1 et un facteur de torsion de 118 à 127.

8. Pneumatique de véhicule selon l'une au moins des revendications précédentes, **caractérisé en ce que** le câble hybride a la construction
• PA 6.6 350x1 + PET 225x1 ou
• PA 6.6 470x1 + PET 225x1 ou
• PA 6.6 235x1 + PET 360x1
et un facteur de torsion de 134 à 145, de préférence de 135.

9. Pneumatique de véhicule selon l'une au moins des revendications précédentes, **caractérisé en ce que** le câble hybride a la construction
• PA 6.6 470x1 + PET 225x1 et est disposé avec un nombre de fils de 90 epdm à 120 epdm, de préférence 100 epdm.

10. Pneumatique de véhicule selon l'une au moins des revendications précédentes, **caractérisé en ce que** le câble hybride a la construction
• PA 6.6 235x1 + PET 225x1 et est disposé avec un nombre de fils de 110 epdm à 120 epdm, de préférence de 120 epdm.
